# EUROPÄISCHE PATENTSCHRIFT

(11) **EP 1 473 920 B1**
(45) Veröffentlichungstag und Bekanntmachung des Hinweises auf die Patenterteilung: **16.08.2006**
(21) Anmeldenummer: 03009910.5
(22) Anmeldetag: 30.04.2003
(51) Int. Cl.: H04M 15/08

(54) **Automatisches R-Gespräch**
Automatic collect call
Appel en PCV automatique

(43) Veröffentlichungstag der Anmeldung: 03.11.2004
(73) Patentinhaber: 01058 Telecom GmbH, 40211 Düsseldorf (DE)
(72) Erfinder: Varol, Ömer Kaan, 40468 Düsseldorf (DE)
(74) Vertreter: Stenger, Watzke & Ring

(56) Entgegenhaltungen:
- EP-A- 0 480 622
- WO-A-00/72571
- WO-A-02/058377
- DE-A- 10 106 914
- US-A- 5 703 935
- US-A- 5 937 043

## Beschreibung

Die Erfindung betrifft ein Verfahren zur Vermittlung von empfangsseitig zu zahlenden Telefongesprächen, bei dem die Rufnummer des Anrufempfängers vom Anrufenden an ein Vermittlungssystem übertragen wird, die Rufnummer in einem Datenbankabgleich auf Gültigkeit überprüft wird und anschließend nach vorhergehender Autorisierung durch den Anrufempfänger eine kommunikationstechnische Verbindung zwischen dem Anrufenden und dem Anrufempfänger automatisch aufgebaut wird, wobei an das Vermittlungssystem eine den Anrufenden identifizierende Information übertragen wird.

Die Besonderheit empfangsseitig zu zahlender Telefongespräche, sogenannter R-Gespräche besteht darin, daß nicht der Anrufende sondern der Anrufempfänger die infolge des Telefongespräches entstehenden Kosten übernimmt. Um sicherzustellen, daß nicht in ungerechtfertigter Weise empfängerseitig Kosten entstehen, wird der Anrufempfänger vor Aufbau einer kommunikationstechnischen Verbindung zwischen Anrufendem und Anrufempfänger dazu aufgefordert, sein Einverständnis zur Kostenübernahme zu erklären. Bleibt eine solche Erklärung des Anrufempfängers aus, so wird dies seitens des operierenden Telekommunikationsunternehmens zur Kenntnis genommen und eine kommunikationstechnische Verbindung zwischen Anrufendem und Anrufempfänger wird nicht aufgebaut.

Zur Vermittlung vom empfangsseitig zu zahlenden Telefongesprächen wird gemäß dem Stand der Technik als Operatoren bezeichnetes Vermittlungspersonal eingesetzt, die nach Anfrage durch den Anrufenden eine Verbindung zum Anrufempfänger aufbauen und diesen nach seinem Einverständnis zur Übernahme der durch die Führung des Telefongespräches zu erwartenden Kosten befragen. Lehnt der Anrufempfänger die Übernahme der Kosten ab, so wird der Anrufende vom Vermittlungspersonal hierüber informiert und die vom Anrufenden gewünschte Verbindung zum Anrufempfänger wird durch das Vermittlungspersonal nicht freigegeben. Sollte der Anrufempfänger mit der Kostenübernahme einverstanden sein, so wird vom Vermittlungspersonal eine entsprechende kommunikationstechnische Verbindung zwischen Anrufendem und Anrufempfänger freigeschaltet. Ohne weitere Zwischenschaltung des Vermittlungspersonals kann alsdann ein Gespräch zwischen Anrufendem und Anrufempfänger geführt werden, wobei die hierdurch entstehenden Kosten dem Anrufempfänger in Rechnung gestellt werden.

Das vorbeschriebene Vermittlungsverfahren ist aus dem Stand der Technik bekannt und hat sich im alltäglichen Praxiseinsatz bewährt. Von Nachteil sind jedoch die hohen Vermittlungskosten sowie die durch den manuellen Verbindungsaufbau bedingten Fehlschaltungen, die insbesondere zu Unzufriedenheit des Anrufenden bzw. des Anrufempfängers führen.

Begründet sind die hohen Vermittlungskosten einerseits durch das notwendigerweise erforderliche Vermittlungspersonal sowie andererseits durch die Ausrüstung, Wartung und Pflege der vom Vermittlungspersonal genutzten Arbeitsplätze. Für die Vermittlung eines empfangsseitig zu zahlenden Telefongespräches ist gemäß dem Stand der Technik vorgesehen, daß der Anrufende die mit Vermittlungspersonal besetzte Vermittlungsstelle anruft. Dies kann beispielsweise durch die Wahl der Ziffer "0" erfolgen. Nach dem Zufallsprinzip wird der Anrufende einem freien Vermittler, dem sogenannten Operator, zugestellt Dieser fragt den Anrufenden nach der Rufnummer des Anrufempfängers, wählt die ihm mitgeteilte Rufnummer und fragt den Anrufempfänger im Falle der Gesprächsentgegennahme nach seinem Einverständnis zur Kostenübernahme. Bestätigt dieser, so stellt der Operator eine kommunikationstechnische Verbindung zwischen Anrufendem und Anrufempfänger her. Bleibt die Bestätigung des Anrufempfängers aus oder nimmt dieser nach Rufwahl durch den Operator das Gespräch nicht entgegen, so wird der Anrufende hierüber informiert und ein Gesprächsaufbau zwischen Anrufendem und Anrufempfänger kommt nicht zustande.

Das manuell vom Operator durchzuführende Vermittlungsverfahren ist in nachteiliger Weise nicht nur zeit-, sondern auch wegen der Personalkosten wirtschaftlich aufwendig. Insgesamt ergeben sich daher vergleichsweise hohe Kosten alleine durch die Gesprächsvermittlung. Hinzu kommt, daß es beispielsweise infolge von Verständigungsschwierigkeiten zwischen Anrufendem/Anrufempfänger einerseits und Operator andererseits zu Fehlern bei der Gesprächsvermittlung kommen kann.

Zur Überwindung der vorgenannten Nachteile der manuellen Gesprächsvermittlung sind aus dem Stand der Technik Verfahren bekannt geworden, die eine automatische Gesprächsvermittlung ermöglichen, so z. B. aus der WO 00/72571 A2, der US 5,703,935 und der EP 0 480 622 A2. Bei diesen vorbekannten Verfahren, die für die Erfindung den gattungsgemäßen Stand der Technik darstellen, fungiert ein automatisch arbeitendes Vermittlungssystem als "Operator". Bevor es zur Freischaltung einer kommunikationstechnischen Verbindung zwischen Anrufendem und Anrufempfänger kommt, hat der Anrufempfänger die Übernahme der im Rahmen des Telefongespräches anfallenden Kosten zu bestätigen. Aus diesem Grunde fragt das Vermittlungssystem beim Anrufempfänger an, ob er bereit ist, die für die Gesprächsführung anfallenden Gebühren zu übernehmen, wobei es dem Anrufempfänger den Namen des Anrufenden mitteilt. Nur wenn der Anrufempfänger diese Anfrage des Vermittlungssystems positiv beantwortet, schaltet dieses die vom Anrufenden gewünschte Verbindung zwischen Anrufendem und Anrufempfänger frei.

Um dem Anrufempfänger den Namen des Anrufenden mitteilen zu können, befragt das Vermittlungssystem den Anrufenden nach seinem Namen. Die daraufhin vom Anrufenden gemachte Eingabe wird vom Vermittlungssystem aufgenommen und gespeichert. Der gespeicherte Name kann alsdann dem Anrufempfänger vorgespielt werden.

Von Nachteil bei diesen aus dem Stand der Technik bekannten Verfahren ist, daß die vom Vermittlungssystem an den Anrufenden gerichtete Anfrage, seinen Namen zu nennen, zur Übermittlung von Kurznachrichten an den Anrufempfänger mißbräuchlich genutzt werden kann. Zu Lasten des Netzbetreibers und/oder der die Gespräche vermittelnden Telefongesellschaft können so für den Anrufenden und den Anrufempfänger kostenfrei Kurzinformationen vom Anrufenden an den Anrufempfänger übermittelt werden.

Aus der US PS 5 937 043 ist es bekannt, zur Aufdeckung von Mißbrauch in einer Datenband die von einer anzumfenden Nummer erfolgben Abbehnungen einer Anrufannahme zu speichern und bei Anrufen zu überprüfen. Gegebenenfalls erfolgt auch eine Analyse der alphannmerischen oder Sprachnachricht.

Aufgabe der Erfindung ist es, ein Verfahren der gattungsgemäßen Art Gebrauchs zu verbessern und dahingehend weiter zu entwickeln, daß auf vereinfachte Weise Mißbrauch aufgedeckt und vermieden werden kann.

Zur **Lösung** dieser Aufgabe wird mit der Erfindung ein Verfahren nach Anspruch 1 vorgeschlagen.

Erfindungsgemäß erfolgt mithin im Unterschied zum Stand der Technik eine Gesprächsvermittlung vollautomatisch, so daß der Einsatz von Vermittlungspersonal nicht erforderlich ist. Zu diesem Zweck ist ein computergesteuertes Vermittlungssystem vorgesehen, dem der Anrufende die Rufnummer des Anrufempfängers mitteilt. Eingegeben wird die Rufnummer des Anrufempfängers über die Wahltastatur des auf Seiten des Anrufenden vorgesehenen Telefonapparates oder über eine Spracheingabe, so daß bei richtiger Eingabe durch den Anrufenden Vermittlungsfehler ausgeschlossen werden können. Die dem Vermittlungssystem auf diese Weise mitgeteilte Rufnummer wird zunächst in einem Datenbankabgleich auf Gültigkeit überprüft. Umfang einer solchen Prüfung kann beispielsweise die vom Anrufenden übertragene Rufnummer als solche sein, das heißt es wird in einem ersten Schritt vom System zunächst einmal überprüft, ob die vom Anrufenden angegebene Rufnummer tatsächlich existent ist. Je nach Informationsstand der Datenbank kann darüber hinaus überprüft werden, ob die als existent erkannte Rufnummer unter Umständen gesperrt ist, ob noch etwaig nicht gezahlte Rechnungen zur angegebenen Rufnummer existent sind oder ob die Rufnummer im Rahmen eines R-Gespräches nicht anwählbar ist. Darüber hinaus sind je nach Bedarf weitere Überprüfungskriterien möglich, je nachdem, welche Informationen im Detail in der zur Gültigkeitsüberprüfung genutzten Datenbank gespeichert sind.

Nach erfolgreich durchgeführter Gültigkeitsüberprüfung der Rufnummer wird der Anrufempfänger vom Vermittlungssystem automatisch angewählt und über die Kostenfolge bei Entgegennahme des Telefongespräches informiert. Stimmt der Anrufempfänger der Übernahme der Telefongesprächkosten zu, so baut das Vermittlungssystem zwischen dem Anrufenden und dem Anrufempfänger automatisch eine kommunikationstechnische Verbindung auf, so daß diese nunmehr das vom Anrufenden gewünschte Telefongespräch führen können. Die infolge dieses Telefongespräches entstehenden Kosten werden dem Anrufempfänger in Rechnung gestellt.

Sollte der Anrufempfänger einer Kostenübernahme nicht zustimmen, so wird der Anrufende vom Vermittlungssystem hierüber informiert und eine kommunikationsstechnische Verbindung zwischen dem Anrufenden und dem Anrufempfänger wird seitens des Vermittlungssystems nicht aufgebaut.

Die im Unterschied zum Stand der Technik vollautomatische Telefongesprächsvermittlung ermöglicht in vorteilhafter Weise zum einen einen vergleichsweise schnellen Verbindungsaufbau, zum anderen stellt sich eine deutlich verringerte Fehlerquote ein, denn erfolgt eine Gesprächsvermittlung ausschließlich aufgrund der vom Anrufenden selbst eingegebenen Rufnummer. Darüber hinaus ist das erfindungsgemäße Verfahren sehr viel weniger kostenintensiv, denn können insbesondere Personalkosten eingespart werden, da es nicht weiter erforderlich ist, zur Gesprächsvermittlung Vermittlungspersonal einzusetzen.

Gemäß einem weiteren Merkmal der Erfindung ist vorgesehen, daß das Vermittlungssystem vom Anrufenden angewählt wird und erst nach einem Verbindungsaufbau zwischen Vermittlungssystem und Anrufendem die Rufnummer des Anrufempfängers an das Vermittlungssystem übertragen wird. Vorgesehen ist gemäß diesem Merkmal der Erfindung, daß der Anrufende zunächst das Vermittlungssystem über eine entsprechende Rufnummer anwählt. Eine solche Rufnummer kann von dem die Vermittlung betreibenden Telekommunikationsunternehmen als Servicerufnummer ausgebildet sein, die vom Anrufenden kostenfrei gewählt werden kann. Sobald die kommunikationstechnische Verbindung zwischen Anrufendem und Vermittlungssystem aufgebaut ist, wird der Anrufende vom Vermittlungssystem dazu aufgefordert, die Rufnummer des von ihm gewünschten Anrufempfängers zu benennen. Dies kann beispielsweise durch Eingabe über das vom Anrufenden verwendete Endgerät oder aber auch durch Spracheingabe erfolgen. Zudem können dem Anrufenden weitergehende Informationen zur Anwendung, Hilfestellung oder dergleichen übermittelt werden.

Zur Identifikation des Anrufenden durch den Anrufempfänger fordert das Vermittlungssystem zudem dazu auf, eine den Anrufenden identifizierende Information an das Vermittlungssystem zu übertragen. Im einfachsten Fall kann dies der Name des Anrufenden sein, der diesen dem Vermittlungssystem durch einfache Spracheingabe übermittelt. Selbstverständlich sind auch andere identifizierende Informationen an das Vermittlungssystem übertragbar, denn kommt es lediglich darauf an, daß der Anrufempfänger anhand der vom Anrufenden gegebenen Information diesen erkennen und so entscheiden kann, ob eine kommunikationstechnische Verbindung zwischen Anrufendem und Anrufempfänger zustande kommen soll. Die den Anrufenden identifizierende Information wird vom Vermittlungssystem zwischengespeichert, so daß diese im weiteren Verfahrensablauf an den Anrufempfänger weitergeleitet werden kann

Sobald dem Vermittlungssystem die Rufnummer des Anrufempfängers sowie die den Anrufenden identifizierende Information bekannt sind, wird der Anrufempfänger vom Vermittlungssystem automatisch angewählt. Sofern dieser das Gespräch entgegennimmt, wird ihm vom Vermittlungssystem die den Anrufenden identifizierende Information, beispielsweise der Name des Anrufenden, mitgeteilt und er wird vom Vermittlungssystem darüber informiert, daß nach seiner Autorisierung die Kosten des zwischen ihm und den Anrufenden zu führende Telefongespräch zu seinen Lasten geht. Durch Tasteneingabe am Telefon oder durch Spracheingabe wird dem Anrufempfänger daraufhin vom Vermittlungssystem die Gelegenheit gegeben, sein Einverständnis zur Kostenübernahme zu erklären. Erklärt der Anrufempfänger sein Einverständnis, so wird eine komunikationstechnische Verbindung zwischen dem Anrufenden und dem Anrufempfänger automatisch aufgebaut. Unterbleibt die Einverständniserklärung des Anrufempfängers, so kommt eine kommunikationstechnische Verbindung zwischen dem Anrufenden und dem Anrufempfänger nicht zustande und der Anrufende wird vom Vermittlungssystem über das Ausbleiben des Einverständnisses des Anrufempfängers informiert.

Sollte sich nach einer Gültigkeitsüberprüfung der von dem Anrufenden angegebenen Rufnummer ergeben, daß diese nicht existent, gesperrt oder sonstwie nicht zugänglich für ein empfangsseitig zu zahlendes Telefongespräch ist, so wird der Anrufende hierüber gleichfalls vom Vermittlungssystem automatisch informiert. Zu diesem Zweck stehen dem Vermittlungssystem entsprechende Ansagen, vorzugsweise in digitaler Form, zur Verfügung, die vom Vermittlungssystem verwaltet und bedarfsgerecht abgespielt werden können. Auch wird der Anrufende im Falle einer zum Anrufempfänger besetzten Leitung informiert und darauf hingewiesen, daß eine Gesprächsvermittlung derzeit nicht durchgeführt werden kann.

Bevor das Vermittlungssystem den Anrufempfänger um sein Einverständnis zur Kostenübernahme bittet, wird dieser über die derzeit gültigen Tarife vom Vermittlungssystem automatisch informiert. Auch diese Tarifinformation kann vorzugsweise in Form vorgefertigter und vom Vermittlungssystem verwalteter Sprachbausteine an den Anrufempfänger übertragen werden. Vorgesehen sein kann in diesem Zusammenhang, daß der Anrufempfänger während des Telefongespräches in immer wiederkehrenden Zeitabständen wunschgemäß darüber informiert wird, welche Kosten bisher infolge des Telefongespräches angefallen sind.

Vorzugsweise ist die Vermittlung des empfangsseitig zu zahlenden Telefongespräches sowohl für den Anrufenden als auch für den Anrufempfänger kostenlos. Erst nach dem durch den Anrufempfänger autorisierten Zustandekommen der kommunikationstechnischen Verbindung zwischen dem Anrufenden und dem Anrufempfänger entstehen die vom Anrufempfänger zu übernehmenden Kosten. Für eine exakte Abrechnung wird daher der Zeitpunkt des Zustandekommens der kommunikationstechnischen Verbindung zwischen dem Anrufenden und dem Anrufempfänger vom Vermittlungssystem erfaßt und die Zeit bis zur Beendigung der kommunikationstechnischen Verbindung gestoppt. Die sich hieraus ergebende Zeitdauer ergibt in Kombination mit dem für das Telefongespräch gültigen Tarif die vom Anrufempfänger zu zahlenden Gebühren. Erfindungsgemäß ist dabei vorgesehen, daß die zu zahlenden Gebühren automatisch vom Vermittlungssystem berechnet und dem Anrufempfänger in Rechnung gestellt werden. Der automatisch berechnete Rechnungsbetrag kann zudem in der Datenbank des Vermittlungssystems gespeichert werden, um so bei der vorbeschriebenen Gültigkeitsüberprüfung ein mögliches Ausschlußkriterium definieren zu können. Dies könnte sich beispielsweise dann ergeben, wenn der Anrufempfänger einer Begleichung noch offener Rechnungen nicht nachkommt, so daß die Rufnummer des Anrufempfängers für die Vermittlung vom empfangsseitig zu zahlenden Telefongesprächen solange gesperrt bleibt, bis die noch offenen Rechnungen bezahlt sind. Vorzugsweise ist daher auch der Zahlungseingang in der Datenbank des Vermittlungssystems zu speichern.

Um sicherzustellen, daß die vom Anrufenden an das Vermittlungssystem zur Identifizierung seiner Person zu übergebende Information nicht mißbräuchlich zur Übermittlung von Kurzinformationen an den Anrufempfänger genutzt wird, ist erfindungsgemäß vorgesehen, daß die den Anrufenden identifizierende Information nur eine bestimmte Wort- oder Zeichenlänge aufweisen darf. Zu diesem Zweck kann beispielsweise vorgesehen sein, daß die Zeit, die dem Anrufenden vom Vermittlungssystem zur Übermittlung der ihn identifizierenden Information zur Verfügung gestellt wird, zeitlich begrenzt ist. Vorgesehen sein kann in diesem Zusammenhang beispielsweise ein Zeitrahmen von 1 bis 2 Sekunden. Eine den Anrufenden identifizierenden Information, die nicht innerhalb dieses Zeitrahmens dem Vermittlungssystem mitgeteilt werden kann, wird wahlweise entweder gar nicht oder nur bezüglich der im Zeitrahmen übermittelten Information an den Anrufempfänger weitergeleitet. Zudem kann bei einer vom Vermittlungssystem festgestellten häufigen Überschreitung des zur Informationsvermittlung zur Verfügung stehenden Zeitrahmens ein entsprechender Eintrag in der Datenbank vorgenommen werden, der gleichfalls zur Sperrung der Rufnummer des Anrufempfängers oder des Anrufenden verwendet werden kann.

Gemäß einer alternativen Ausgestaltung der Erfindung ist vorgesehen, daß das Vermittlungssystem vom Anrufenden angewählt wird, wobei zeitgleich mit Anwahl des Vermittlungssystems die Rufnummer des Anrufempfängers an das Vermittlungssystem übertragen wird. Zu diesem Zweck ist vorgesehen, daß der Anrufer zur Anwahl des Vermittlungssystems eine mehrstellige Rufnummer verwendet, die aus Anwahlnummer für das Vermittlungssystem einerseits und der Rufnummer des Anrufempfängers andererseits besteht. So kann beispielsweise vorgesehen sein, daß die Rufnummer zur Anwahl des Vermittlungssystems ein mehrstelliger Zahlencode ist, der eine definierte Ziffernzahl aufweist. Angehängt an diesen Zahlencode ist die Rufnummer des Anrufempfängers, die beispielsweise aus Vorwahl und Apparatennummer des Anrufempfängers gebildet ist. Vom Vermittlungssystem wird die an den Zahlencode angehängte Rufnummer des Anrufempfängers automatisch erkannt, so daß diesem bereits mit Anwahl durch den Anrufenden die im weiteren zu wählende Rufnummer des Anrufempfängers bekannt ist.

Nach Anwahl des Vermittlungssystems durch den Anrufenden kann alsdann anhand der bereits bekannten Rufnummer des Anrufempfängers eine Statusüberprüfung des Anrufempfängers durchgeführt werden, das heißt es kann vom Vermittlungssystem überprüft werden, ob der Anschluß des Anrufempfängers besetzt ist oder nicht. Sollte diese Überprüfung ergeben, daß der Anschluß des Anrufempfängers besetzt ist, so wird dies dem Anrufenden automatisch mitgeteilt und die Verbindung zwischen Anrufendem und Vermittlungssystem wird automatisch unterbrochen. Das Gespräch ist damit beendet.

Sollte die Statusüberprüfung des Anrufempfängers ergeben, daß der Anschluß des Anrufempfängers nicht besetzt ist, so erfolgt in einem Datenbankabgleich eine Gültigkeitsüberprüfung der Rufnummer des Anschlußempfängers. Zeitgleich wird durch Einschaltung des Freizeichens dem Anrufenden signalisiert, daß der Anschluß des Anrufempfängers nicht besetzt ist und nach abgeschlossener Gültigkeitsüberprüfung der Rufnummer eine Verbindung zum Anrufempfänger aufgebaut wird.

Sollte sich nach einer Gültigkeitsüberprüfung der von dem Anrufenden angegebenen Rufnummer ergeben, daß diese nicht existent, gesperrt oder sonstwie nicht zugänglich für ein empfangsseitig zu zahlendes Telefongespräch ist, so wird der Anrufende hierüber gleichfalls vom Vermittlungssystem automatisch informiert. Zu diesem Zweck stehen dem Vermittlungssystem entsprechende Ansagen, vorzugsweise in digitaler Form, zur Verfügung, die vom Vermittlungssystem verwaltet und bedarfsgerecht abgespielt werden können. Sollte hingegen die Rufnummernüberprüfung erfolgreich durchgeführt sein, so wird eine kommunikationstechnische Verbindung zwischen dem Anrufenden einerseits und dem Anrufempfänger andererseits aufgebaut. Nimmt der Anrufempfänger beispielsweise wegen Abwesenheit das bei ihm eingehende Gespräch nicht entgegen, so wird der Anrufende hierüber informiert und die Verbindung zwischen dem Anrufenden und dem Vermittlungssystem wird unterbrochen.

Nimmt der Anrufempfänger den bei ihm eingehenden Anruf entgegen, so werden zunächst einmal der Anrufende und der Anrufempfänger vom Vermittlungssystem über die anstehende Vermittlung des empfangsseitig zu zahlenden Telefongespräches informiert. In diesem Zusammenhang wird der Anrufende vom Vermittlungssystem dazu aufgefordert, beispielsweise im Anschluß an ein vom Vermittlungssystem übersandtes akustisches Signal, eine ihn identifizierende Information, vorzugsweise seinen Namen, bekannt zu geben, was vorzugsweise mittels Spracheingabe geschieht. Zudem können dem Anrufenden weitergehende Informationen zur Anwendung, Hilfestellung oder dergleichen übermittelt werden Der Anrufempfänger wird indes vom Vermittlungssystem über die Funktionsweise des empfangsseitig zu zahlenden Telefongespräches sowie über die gültigen Tarife informiert. Alsdann wird vom Vermittlungssystem eine kommunikationstechnische Verbindung zwischen dem Anrufenden und dem Anrufempfänger für ein vorgebbares Zeitintervall automatisch aufgebaut und der Anrufer wird durch Abgabe eines entsprechenden Signals dazu aufgefordert, nunmehr seine ihn identifizierende Information, vorzugsweise durch Spracheingabe bekannt zu machen. Diese wird dann über die aufgebaute kommunikationstechnische Verbindung zwischen Anrufendem und Anrufempfänger direkt an den Anrufempfänger weitergeleitet, so daß dieser darüber in Kenntnis gesetzt wird, wer die Person des Anrufenden ist. Nach Ablauf des vorgebbaren Zeitintervalls wird die kommunikationstechnische Verbindung zwischen Anrufendem und Anrufempfänger wieder getrennt.

Im weiteren wird nun der Anrufende vom Verbindungssystem dazu aufgefordert, die Verbindung zu halten, während der Anrufempfänger vom Verbindungssystem nach seinem Einverständnis befragt wird, die Kosten des Telefongespräches zu übernehmen. Im Falle der positiven Bestätigung durch den Anrufempfänger wird erneut eine kommunikationstechnische Verbindung zwischen Anrufendem und Anrufempfänger aufgebaut, so daß nunmehr das Telefongespräch geführt werden kann. Sollte der Anrufempfänger sein Einverständnis zur Kostenübernahme nicht geben, so wird dies dem Anrufenden mitgeteilt und die Verbindung des Anrufenden zum Vermittlungssystem einerseits sowie auch die Verbindung des Vermittlungssystems zum Anrufempfängers andererseits wird abgebrochen. Das Gespräch ist damit beendet.

Im Unterschied zu dem aus dem Stand der Technik bekannten Verfahren ist das erfindungsgemäße Verfahren gemäß dieser alternativen Ausgestaltung mithin nicht nur vollautomatisch durchführbar, zudem wird bereits mit Anwahl des Vermittlungssystems durch den Anrufenden die Rufnummer des Anrufempfängers übertragen. Es findet mithin in vorteilhafter Weise keine zeitraubende Kommunikation mehr zwischen Anrufendem und Vermittlungssystem statt. Hierdurch kann nicht nur die Vermittlungszeit zwischen Anrufendem und Anrufempfänger verkürzt werden, auch ergibt sich hierdurch eine Kostenreduzierung, denn gehen die Kosten zur Vermittlungsverbindung zwischen Anrufendem und Vermittlungssystem zu Lasten des Netzbetreibers.

Von Vorteil ist des weiteren, daß die zur Identifizierung des Anrufenden an den Anrufempfänger zu übermittelnde Information nicht über das Vermittlungssystem, sondern über eine direkt zwischen dem Anrufenden und dem Anrufempfänger temporär ausgebildete kommunikationstechnische Verbindung geführt wird. Erreicht wird hierdurch eine Entlastung des Vermittlungssystems, das nur eine begrenzte Anzahl von Vermittlungsdiensten gleichzeitig abwickeln kann. Darüber hinaus kann im Falle der Gesprächsautorisierung durch den Anrufempfänger auch die zur Übertragung der den Anrufenden identifizierenden Information erfolgte Freischaltung der kommunikationstechnischen Verbindung zwischen Anrufendem und Anrufempfänger in Rechnung gestellt werden. Zu Lasten des Anrufempfängers kann so eine weitere Kostenreduzierung des das Vermittlungssystem bereitstellenden Betreibers erreicht werden.

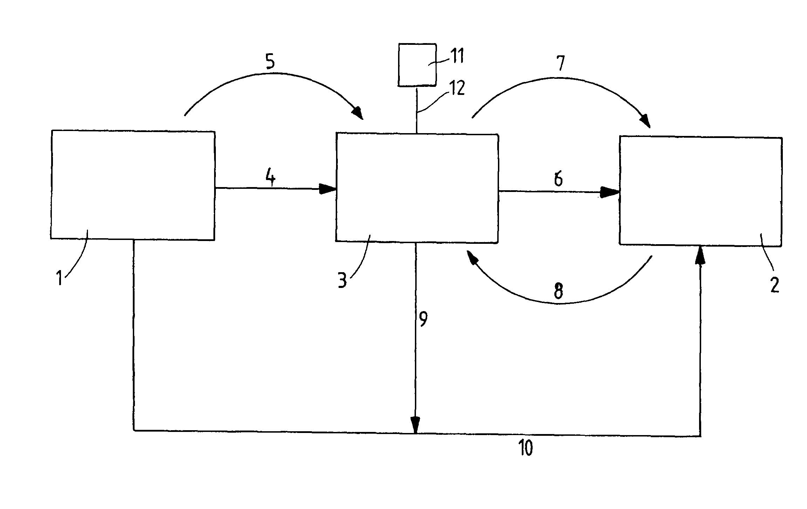

Weitere Merkmale und Vorteile der Erfindung ergeben sich aus der Beschreibung anhand der nachfolgenden Fig. 1, die schematisch einen beispielhaften Ablauf des erfindungsgemäßen Vermittlungsverfahrens zeigt.

Schematisch dargestellt sind in Fig. 1 der Anrufende 1, der Anrufempfänger 2 sowie das Vermittlungssystem 3. Zur Vermittlung eines vom Anrufempfänger 2 zu zahlenden R-Gespräches hat der Anrufende 1 zunächst das Vermittlungssystem 3 anzuwählen, was in Fig. 1 schematisch durch den mit 4 bezeichneten Pfeil kenntlich gemacht ist. Zur Anwahl des Vermittlungssystems 3 durch den Anrufenden 1 steht vorzugsweise eine vom Betreiber des Vermittlungssystems 3 kostenlos bereitgestellte Servicenummer zur Verfügung, so daß das Telefongespräch zwischen Anrufendem 1 und Vermittlungssystem 3 für den Anrufenden 1 kostenfrei ist.

Nach Zustandekommen der kommunikationstechnischen Verbindung zwischen Anrufendem 1 und Vermittlungssystem 3 wird der Anrufende 1 vom Vermittlungssystem 3 über den Ablauf des Vermittlungsverfahrens informiert und darum gebeten, die Rufnummer des Anrufempfängers sowie seinen Namen zu nennen. Dies kann beispielsweise durch Spracheingabe, Tasteneingabe über das auf Seiten des Anrufenden vorhandenen Telefons oder durch eine Kombination dieser Möglichkeiten erfolgen. Die Eingabe der vom Vermittlungssystem geforderten Informationen ist in der Fig. 1 durch den mit 5 bezeichneten Pfeil symbolisiert.

Nach Übergabe der Rufnummer des Anrufempfängers 2 vom Anrufenden wird vom Vermittlungssystem 3 mittels eines Datenbankabgleichs eine Gültigkeitsprüfung der übergebenen Rufnummer durchgeführt. Zudem wird der vom Anrufenden 1 übergebene Name vom Vermittlungssystem 3 gespeichert. Nach erfolgreich durchgeführter Rufnummernüberprüfung wählt das Vermittlungssystem 3 den Anrufempfänger 2 an, was durch den mit 6 gekennzeichneten Pfeil symbolisiert ist. Sobald der Anrufempfänger 2 das Gespräch entgegennimmt, wird er vom Vermittlungssystem unter Nennung des Namens des Anrufenden 1 darüber informiert, daß der Anrufende 1 ein R-Gespräch führen möchte. Auch werden dem Anrufempfänger die derzeit gültigen Tarife für die Übernahme des R-Gespräches mitgeteilt. Die dem Anrufempfänger 2 durch das Vermittlungssystem 3 bekannt gemachten Informationen sind in der Fig. 1 durch den mit 7 gekennzeichneten Pfeil symbolisiert.

Im weiteren Verfahrensablauf fordert das Vermittlungssystem 3 den Anrufempfänger 2 des weiteren dazu auf, seine Einwilligung zur Kostenübernahme zu erklären. Dieses kann entweder durch Spracheingabe oder auch durch Wahl einer entsprechenden Tastenkombination erfolgen, was durch den mit 8 gekennzeichneten Pfeil symbolisiert ist.

Sobald dem Vermittlungssystem 3 die Autorisierung der Kostenübernahme durch den Anrufempfänger 2 zugegangen ist, gibt dieses entsprechend dem mit 9 gekennzeichneten Pfeil automatisch eine kommunikationstechnische Verbindung 10 zwischen dem Anrufenden 1 und dem Anrufempfänger 2 frei, so daß diese nunmehr ohne Zwischenschaltung des Vermittlungssystems 3 ein Telefongespräch über die kommunikationstechnische Verbindung 10 führen können.

Mit Freischaltung der kommunikationstechnischen Verbindung 10 zwischen dem Anrufenden 1 und dem Anrufempfänger 2 übernimmt der Anrufempfänger 2 die für das Telefongespräch entstehenden Kosten. Zu diesem Zweck wird der Beginn der Verbindungsfreischaltung vom Vermittlungssystem 3 erfaßt und es wird die Zeitdauer des geführten Telefongespräches gemessen. In Kombination mit den dem Anrufempfänger 2 zuvor bekanntgemachten Tarifen ergibt sich sodann die Gebühr für das geführte Telefongespräch, was vom Vermittlungssystem 3 automatisch berechnet und dem Anrufempfänger 2 in Rechnung gestellt wird.

Für eine Überprüfung der Gültigkeit der vom Anrufenden 1 angegebenen Rufnummer des Anrufempfängers 2 ist eine Datenbank 11 vorgesehen, die über eine Verbindung 12 kommunikationstechnisch mit dem Vermittlungssystem 3 in Verbindung steht.

Das vorbeschriebene Ausführungsbeispiel dient lediglich der Erläuterung und wirkt nicht beschränkend.

## Patentansprüche

1. Verfahren zur Vermittlung von empfangsseitig zu zahlenden Telefongesprächen, bei dem die Rufnummer des Anrufempfängers (2) vom Anrufenden (1) an ein Vermittlungssystem (3) übertragen wird, die Rufnummer in einem Datenbankabgleich auf Gültigkeit überprüft wird und anschließend nach vorhergehender Autorisierung durch den Anrufempfänger (2) einekommunikationstechnische Verbindung zwischen dem Anrufenden (1) und dem Anrufempfänger (2) automatisch aufgebaut wird, wobei an das Vermittlungssystem (3) eine den Anrufenden (1) identifizierende Information übertragen wird, **dadurch** gekenntzeichnet, daß die Zeit, die dem Anrufenden (1) vom Vermittlungssystem (3) zur Übermittlung der ihn identifizierenden Information zur Verfügung gestellt wird, zeitlich begrenzt wird, wobei die den Anrufenden identifizierende Information über den vom Vermittlungssystem vorgegebenen Zeitrahmen hinaus dem Vermittlungssystem mitgeteilt werden kann, und daß bei einer vom Vermittlungssystem (3) festgestellten, häufigen Überschreitung des zur Informationsvermittlung zur Verfügung stehenden Zeitraums zur Vermeidung von Mißbrauch ein entsprechender Eintrag in die Datenbank (11) vorgenommen wird

2. Verfahren nach Anspruch 1, **dadurch gekennzeichnet, daß** die Zeit, die dem Anrufenden (1) vom Vermittlungssystem (3) zur Übermittlung der ihn identifizierenden Information zur Verfügung gestellt wird, auf einen Zeitraum von 1 bis 2 Sekunden begrenzt wird.

3. Verfahren nach Anspruch 1 oder 2, **dadurch gekennzeichnet, daß** eine den Anrufenden (1) identifizierende Information, die dem Vermittlungssystem (3) nicht innerhalb des vorgegebenen Zeitraums mitgeteilt wird, nicht an den Anrufempfänger (2) weitergeleitet wird.

4. Verfahren nach Anspruch 1 oder 2, **dadurch gekennzeichnet, daß** eine den Anrufenden (1) identifizierende Information, die dem Vermittlungssystem (3) nicht innerhalb des vorgegebenen Zeitraums mitgeteilt wird, nur bezüglich der im Zeitraum übermittelten Information an den Anrufempfänger (2) weitergeleitet wird.

5. Verfahren nach Anspruch 4, **dadurch gekennzeichnet, daß** der Eintrag in die Datenbank (11) zur Sperrung der Rufnummer des Anrufempfängers (2) oder des Anrufenden (1) verwendet wird.

6. Verfahren nach einem der vorhergehenden Ansprüche, **dadurch gekennzeichnet, daß** das Vermittlungssystem (3) vom Anrufenden (1) angewählt und erst nach einem Verbindungsaufbau zwischen Vermittlungssystem (3) und Anrufendem (1) die Rufnummer des Anrufempfängers (2) an das Vemittlungssystem (3) übertragen wird.

7. Verfahren nach einem der vorhergehenden Ansprüche, **dadurch gekennzeichnet, daß** bei ausbleibender Autorisierung durch den Anrufempfänger (2) an den Anrufenden (1) eine entsprechende Benachrichtigung übermittelt wird.

8. Verfahren nach einem der vorhergehenden Ansprüche, **dadurch gekennzeichnet, daß** eine Statusüberprüfung des Anrufempfängers (2) durchgeführt wird.

9. Verfahren nach einem der vorhergehenden Ansprüche, **dadurch gekennzeichnet, daß** nach erfolgtem Telefongespräch die hierfür zu zahlende Gebühr automatisch berechnet und dem Anrufempfänger (2) in Rechnung gestellt wird.

## Claims

1. A method of switching telephone conversations to be paid for by the receiver in which the number of the call receiver (2) is transmitted from the caller (1) to an exchange system (3), the validity of the telephone number is checked in a database match and a communication connection between the caller (1) and the call receiver (2) is automatically created in accordance with a preceding authorisation by the call receiver (2), wherein information identifying the caller (1) is transmitted to the exchange system (3), **characterised in that** the time made available to the caller (1) by the exchange system (3) for transmitting the information identifying him is limited, whereby the information identifying the caller can be communicated to the exchange system until after the period of time provided by the exchange system and that in the event that the exchange system (3) determines that the period of time available for the transmission of information is frequently exceeded, a corresponding entry is made in the database (11) to prevent misuse.

2. A method as claimed in Claim 1, **characterised in that** the time which is made available to the caller (1) by the exchange system (3) for transmitting the information identifying him is limited to a period of time of 1 to 2 seconds.

3. A method as claimed in Claim 1 or 2, **characterised in that** information identifying the caller (1), which is not communicated to the exchange system (3) within the predetermined period of time, is not forwarded on to the call receiver (2).

4. A method as claimed in Claim 1 or 2, **characterised in that** information identifying the caller (1), which is not communicated to the exchange system (3) within the predetermined period of time, is only forwarded on to the call receiver (2) as regards the information transmitted within the period of time.

5. A method as claimed in Claim 4, **characterised in that** the entry in the database (11) is used for blocking the telephone number of the call receiver (2) or of the caller (1).

6. A method as claimed in one of the preceding claims, **characterised in that** the exchange system (3) is dialled by the caller (1) and the telephone number of the call receiver (2) is transmitted to the exchange system (3) only after a connection has been created between the exchange system (3) and the caller (1).

7. A method as claimed in one of the preceding claims, **characterised in that** if authorisation by the call receiver (2) to the caller (1) does not materialise, a notification to this effect is transmitted.

8. A method as claimed in one of the preceding claims, **characterised in that** a status check of the call receiver (2) is performed.

9. A method as claimed in one of the preceding claims, **characterised in that** after a telephone conversation has been completed, the fee to be paid for it is calculated automatically and charged to the call receiver (2).

## Revendications

1. Procédé pour la transmission d'appels téléphoniques à payer par le destinataire, dans lequel le numéro d'appel du destinataire de l'appel (2) est communiqué par l'auteur de l'appel (1) à un système de transmission (3), la validité du numéro d'appel est contrôlée par une comparaison dans une base de données et, après l'autorisation préalable du destinataire de l'appel (2), une communication est établie automatiquement entre l'auteur de l'appel (1) et le destinataire de l'appel (2), une information qui identifie l'auteur de l'appel (1) étant communiquée au système de transmission (3), **caractérisé en ce que** le temps mis à la disposition de l'auteur de l'appel (1) par le système de transmission (3) pour communiquer l'information qui l'identifie est limité, l'information identifiant l'auteur de l'appel pouvant être communiquée au système de transmission au-delà de la limite de temps prédéterminée par le système de transmission, et **en ce que** lorsque le système de transmission (3) constate un dépassement fréquent du délai disponible pour la communication des informations, une entrée correspondante est enregistrée dans la base de données (11) afin d'empêcher les abus.

2. Procédé selon la revendication 1, **caractérisé en ce que** le temps mis à la disposition de l'auteur de l'appel (1) par le système de transmission (3) pour la communication de l'information qui l'identifie est limité à une durée de 1 à 2 secondes.

3. Procédé selon la revendication 1 ou 2, **caractérisé en ce qu'**une information identifiant l'auteur de l'appel (1) qui n'est pas communiquée au système de transmission (3) dans le délai prédéterminé n'est pas transmise au destinataire de l'appel (2).

4. Procédé selon la revendication 1 ou 2, **caractérisé en ce qu'**une information identifiant l'auteur de l'appel (1) qui n'est pas communiquée au système de transmission (3) dans le délai prédéterminé n'est transmise au destinataire de l'appel (2) que pour les informations transmises pendant cet intervalle de temps.

5. Procédé selon la revendication 4, **caractérisé en ce que** l'enregistrement dans la base de données (11) est utilisé pour bloquer le numéro d'appel du destinataire de l'appel (2) ou de l'auteur de l'appel (1).

6. Procédé selon l'une quelconque des revendications précédentes, **caractérisé en ce que** le système de transmission (3) est appelé par l'auteur de l'appel (1) et le numéro d'appel du destinataire de l'appel (2) n'est communiqué au système de transmission (3) qu'après l'établissement de la communication entre le système de transmission (3) et l'auteur de l'appel (1).

7. Procédé selon l'une quelconque des revendications précédentes, **caractérisé en ce que** si le destinataire de l'appel (2) ne donne pas son autorisation, un message correspondant est transmis à l'auteur de l'appel (1).

8. Procédé selon l'une quelconque des revendications précédentes, **caractérisé en ce qu'**un contrôle de l'état du destinataire de l'appel (2) est effectué.

9. Procédé selon l'une quelconque des revendications précédentes, **caractérisé en ce qu'**après la communication téléphonique, le prix à payer pour celle-ci est automatiquement calculé et facturé au destinataire de l'appel (2).
